# EUROPEAN PATENT APPLICATION

(11) **EP 4 009 510 A1**
(43) Date of publication of application: **08.06.2022**
(21) Application number: 20849964.0
(22) Date of filing: 01.06.2020
(51) Int. Cl.: H02P 5/46

(54) **MOTOR CONTROL DEVICE, MOVING BODY, MOTOR CONTROL METHOD, AND PROGRAM**

(30) Priority: 02.08.2019 JP 2019143247
(71) Applicant: Panasonic Intellectual Property Management Co., Ltd., Osaka-shi, Osaka 540-6207 (JP)
(72) Inventor: KUBOI, Yusuke, Osaka-shi, Osaka 540-6207 (JP); FUJIWARA, Hiroshi, Osaka-shi, Osaka 540-6207 (JP); TAZAWA, Toru, Osaka-shi, Osaka 540-6207 (JP)
(74) Representative: SSM Sandmair
(86) International application number: PCT/JP2020/021557
(87) International publication number: WO 2021/024591

(57) **Abstract**

A motor control device includes an acquisition unit and a motor controller. The acquisition unit acquires at least one of a group of three or more torque detection values and a group of three or more thrust detection values. The three or more torque detection values correspond to torques generated between three or more motors and three or more propellers mounted on a moving body main body, respectively. The motor controller controls the three or more motors based on at least one of the group of the three or more torque detection values and the group of the three or more thrust detection values.

## Description

### TECHNICAL FIELD

The present disclosure generally relates to a motor control device, a moving body, a motor control method, and a program. More specifically, the present disclosure relates to the motor control device that controls a motor that rotates a propeller, the moving body including the motor control device, the motor control method, and the program.

### BACKGROUND ART

Conventionally, a technique for controlling a motor included in a moving body such as a drone is known (see, for example, PTL 1). An unmanned aerial vehicle airplane (moving body) described in PTL 1 has an attitude control loop. The attitude control loop includes an angular velocity control loop. The angular velocity control loop uses a proportion integral (PI) corrector to calculate an angular velocity set point of the unmanned aerial vehicle. The angular velocity control loop calculates a difference between the angular velocity set point and the angular velocity effectively measured by a gyrometer. By using this information, various set points are calculated for a rotational speed of the motor (therefore, lift). The set points are transmitted to the motor in order to perform a motion operation of the unmanned aerial vehicle.

In the unmanned aerial vehicle (moving body) described in PTL 1, a correction of the control of the motor for correcting the attitude of the unmanned aerial vehicle first requires a measurement of a change in the attitude of the unmanned aerial vehicle using the gyrometer after the attitude of the unmanned aerial vehicle changes. Thus, this unmanned aerial vehicle has a problem with control responsiveness of the motor.

### Citation List

### Patent Literature

PTL 1: Japanese Translation of PCT International Application No. 2015-514263

### SUMMARY OF THE INVENTION

An object of the present disclosure is to provide a motor control device capable of improving control responsiveness of a motor, a moving body, a motor control method, and a program.

A motor control device according to one aspect of the present disclosure includes an acquisition unit and a motor controller. The acquisition unit acquires at least one of a group of three or more torque detection values and a group of three or more thrust detection values. The three or more torque detection values correspond to torques generated between three or more motors and three or more propellers mounted on a moving body main body, respectively. The three or more propellers correspond one-to-one to the three or more motors, and rotate through forces applied from the corresponding motors to generate thrusts. The three or more thrust detection values correspond to the thrusts generated by the three or more propellers, respectively. The motor controller controls the three or more motors based on at least one of the group of the three or more torque detection values and the group of the three or more thrust detection values.

A moving body according to one aspect of the present disclosure includes a motor control device, three or more motors, three or more propellers, and a moving body main body.

A motor control method according to one aspect of the present disclosure includes a first step and a second step. In the first step, at least one of a group of three or more torque detection values and a group of three or more thrust detection values is acquired. The three or more torque detection values correspond to torques generated between three or more motors and three or more propellers mounted on a moving body main body, respectively. The three or more propellers correspond one-to-one to the three or more motors, and rotate through forces applied from the corresponding motors to generate thrusts. The three or more thrust detection values correspond to the thrusts generated by the three or more propellers, respectively. In the second step, the three or more motors are controlled based on at least one of the group of the three or more torque detection values and the group of the three or more thrust detection values.

A program according to one aspect of the present disclosure is a program for causing one or more processors to execute the motor control method.

The present disclosure has an advantage such that control responsiveness of the motors can be improved.

### BRIEF DESCRIPTION OF DRAWINGS

FIG. 1 is a block diagram of main components of a moving body according to an exemplary embodiment.
FIG. 2 is a block diagram of the moving body according to the exemplary embodiment.
FIG. 3 is a perspective view illustrating a schematic shape of the moving body according to the exemplary embodiment.
FIG. 4 is a flowchart illustrating an operation example of the moving body according to the exemplary embodiment.
FIG. 5 is a block diagram of main components of a moving body according to a first modification.
FIG. 6 is a block diagram of main components of a moving body according to a second modification.

### DESCRIPTION OF EMBODIMENT

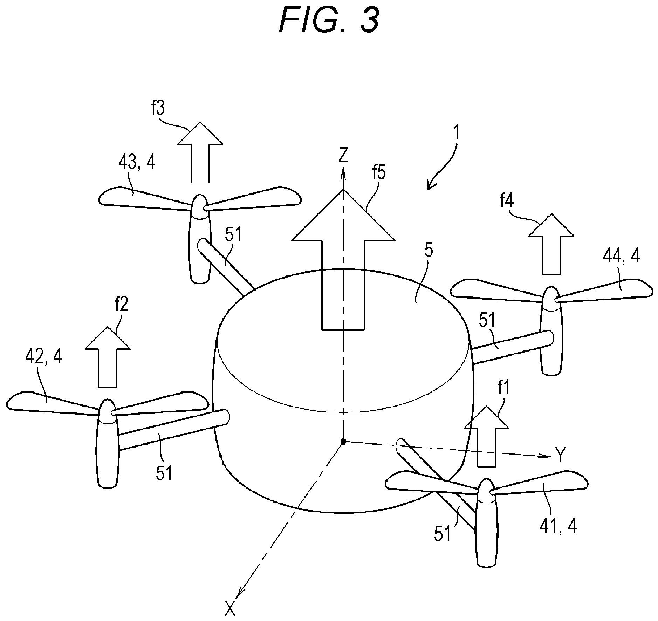

Hereinafter, motor control device 10, moving body 1, a motor control method, and a program according to an exemplary embodiment will be described with reference to the drawings. The exemplary embodiment described below is merely one of various exemplary embodiments of the present disclosure. The exemplary embodiment described below can be variously changed according to a design and the like as long as the object of the present disclosure can be achieved. In addition, FIG. 3 described in the following exemplary embodiment is a schematic view, and the ratio of the size and the thickness of each component in the drawing is not necessarily reflected in the actual dimensional ratio.

### (1) Overview

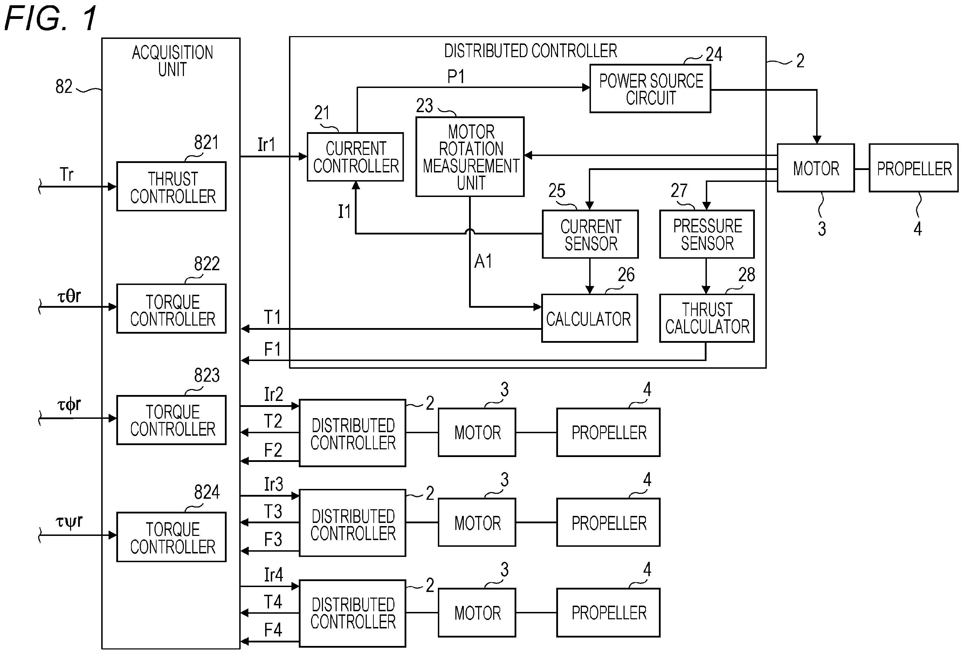

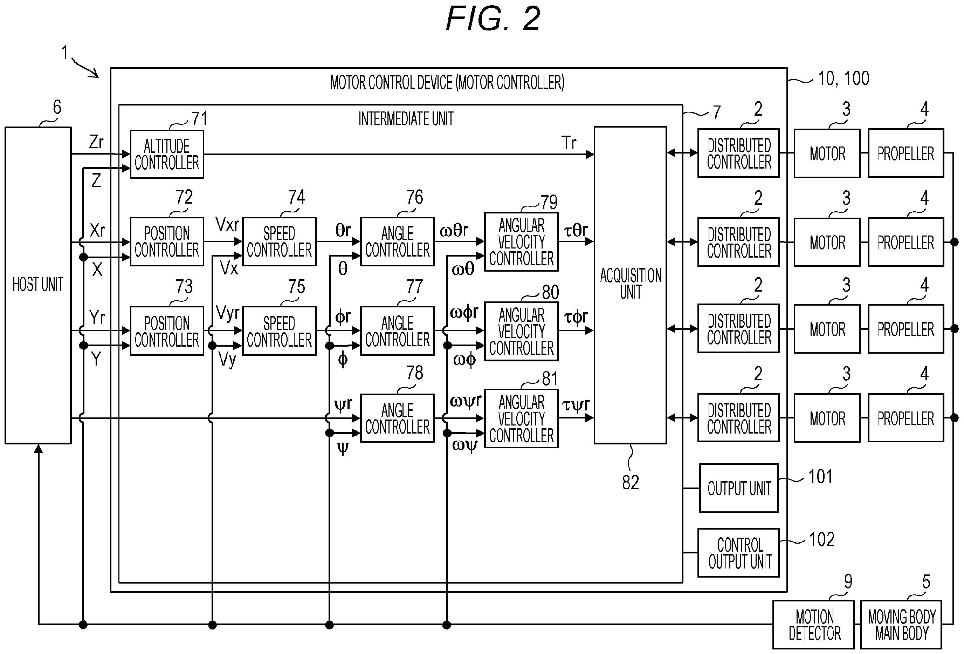

FIG. 1 is a block diagram of main components of moving body 1 according to the exemplary embodiment. FIG. 2 is a block diagram of moving body 1 according to the exemplary embodiment. As illustrated in FIG. 2, moving body 1 includes motor control device 10, a plurality of (four in FIG. 2) motors 3, a plurality of (four in FIG. 2) propellers 4 (rotary blades), and moving body main body 5. Moving body 1 includes three or more motors 3 and three or more propellers 4. The plurality of motors 3, the plurality of propellers 4, and motor control device 10 are mounted on moving body main body 5.

The plurality of motors 3 and the plurality of propellers 4 correspond one-to-one to each other. Propellers 4 are rotated by forces applied from corresponding motors 3, respectively. As a result, torques are generated between motors 3 and corresponding propellers 4, respectively. When propellers 4 are rotated by corresponding motors 3, respectively, thrusts that move moving body 1 are generated.

Each motor control device 10 according to the exemplary embodiment includes acquisition unit 82 and motor controller 100. As illustrated in FIGS. 1 and 2, acquisition unit 82 acquires at least one of a group of three or more (four in the exemplary embodiment) torque detection values T1 to T4 and a group of three or more (four in the exemplary embodiment) thrust detection values F1 to F4. Torque detection values T1 to T4 correspond to torques generated between a plurality of (three or more) motors 3 and a plurality of (three or more) propellers 4, respectively. Thrust detection values F1 to F4 correspond to thrusts generated by three or more propellers 4, respectively. Motor controller 100 controls three or more motors 3 based on at least one of the group of three or more torque detection values T1 to T4 and the group of three or more thrust detection values F1 to F4 calculated by acquisition unit 82.

Here, the phrase "(motor controller 100) controls three or more motors 3 based on at least one of the group of three or more torque detection values T1 to T4 and the group of three or more thrust detection values F1 to F4" has the following meaning. In a case of focusing on one motor 3 among three or more motors 3, motor controller 100 does not control motor 3 solely based on the torque detection value and the thrust detection value of motor 3. Motor controller 100 controls one motor 3 based on three or more torque detection values T1 to T4 acquired from three or more motors 3. Alternatively, motor controller 100 controls one motor 3 based on three or more thrust detection values F1 to F4 acquired from three or more motors 3. Alternatively, motor controller 100 controls one motor 3 based on three or more torque detection values T1 to T4 and three or more thrust detection values F1 to F4 acquired from three or more motors 3. In short, motor controller 100 controls each motor 3 based on at least one of the group of three or more torque detection values T1 to T4 and the group of three or more thrust detection values F1 to F4.

In motor control device 10, after a change in at least one of the torque generated between each propeller 4 and each motor 3 and the thrust generated by each propeller 4, the control of each motor 3 can be changed based on at least one of the group of three or more changed torque detection values T1 to T4 and the group of three or more changed thrust detection values F1 to F4 even before a change in attitude, speed, or the like of moving body 1 caused by the change in at least one of the torque and the thrust. Therefore, control responsiveness of motors 3 can be improved as compared with a case of controlling motors 3 based on the detection result of the attitude, the speed, or the like of moving body 1. For example, when the attitude of moving body 1 starts to change, the attitude can be corrected by controlling motors 3 based on at least changed one of the group of three or more torque detection values T1 to T4 and the group of three or more thrust detection values F1 to F4 before the attitude greatly changes.

### (2) Configuration

Hereinafter, moving body 1 and motor control device 10 according to the exemplary embodiment will be described in more detail. FIG. 3 is a perspective view illustrating a schematic shape of moving body 1 according to the exemplary embodiment. In the present exemplary embodiment, a case where moving body 1 (see FIG. 3) is a drone (aerial drone) will be described as a typical example. The drone is a type of unmanned aircraft. The drone is a type of multicopter having three or more propellers 4. The drone has a function of autonomously flying. As to the drone, an attitude of an airframe (moving body main body 5) is controlled by controlling numbers of revolutions of three or more propellers 4. A moving direction of the airframe changes in accordance with the change in the attitude of the airframe.

In FIG. 3, a roll axis, a pitch axis, and a yaw axis of moving body main body 5 are illustrated as an X axis, a Y axis, and a Z axis, respectively. As illustrated in FIG. 3, four propellers 4 are mounted to moving body main body 5. More specifically, moving body main body 5 has four arms 51 extending in four respective directions. Propeller 4 is attached to a distal end of each arm 51 of moving body main body 5. Hereinafter, in order to distinguish four propellers 4, four propellers 4 may be referred to as propellers 41, 42, 43, 44, respectively. Four propellers 41 to 44 are arranged in this order along a circumference of moving body main body 5 (around the yaw axis (Z axis)).

Two propellers 41, 43 of four propellers 4 rotate in a first direction and remaining two propellers 42, 44 rotate in a second direction opposite the first direction. Two propellers 4 located diagonally to each other rotate in the same direction.

Each of four propellers 4 is rotated by a driving force of corresponding motor 3 to generate a thrust. FIG. 3 shows arrows f1 to f4 representing the thrusts of propellers 4 and arrow f5 representing a thrust of moving body main body 5. The direction of the thrust of each propeller 4 is the yaw axis direction (upward). The thrusts can vary among four propellers 4.

In each of four propellers 4, the larger number of revolutions generates the greater thrust. The thrust and the attitude of moving body main body 5 change in accordance with the thrusts of four propellers 4. For example, the numbers of revolutions of two propellers 41, 42 provided in a front half (a positive side of the X axis) of moving body 1 are set to be smaller than the numbers of revolutions of two propellers 43, 44 provided in a rear half of moving body 1. This causes moving body 1 to be tilted forward, and thus moving body 1 generates a thrust that acts upward and forward to move forward.

The torques acting upon moving body main body 5 from four propellers 4 are also determined by the numbers of revolutions of four propellers 4. For example, the numbers of revolutions of two propellers 41, 43 positioned diagonally to each other are assumed to be smaller or larger than the numbers of revolutions of remaining two propellers 42, 44. Then, a torque corresponding to a difference between the torques of two propellers 41, 43 and the torques of two propellers 42, 44 acts on moving body main body 5, and thus moving body main body 5 rotates about the yaw axis (Z axis).

As illustrated in FIG. 2, moving body 1 includes host unit 6, motor control device 10, four motors 3, four propellers 4, moving body main body 5, and motion detector 9. Each motor 3 is, for example, a brushless motor. Moving body 1 includes, for example, a computer system having one or more processors and memories. At least some of the functions of host unit 6 and motor control device 10 are implemented by the processor of the computer system executing a program recorded in the memory of the computer system. The program may be recorded in the memory, may be provided through a telecommunication line such as the Internet, or may be recorded in a non-transitory recording medium such as a memory card.

Motor control device 10 includes motor controller 100 that controls the four motors 3. Motor control device 10 includes only motor controller 100. Motor controller 100 includes intermediate unit 7, a plurality of (four in FIG. 2) distributed controllers 2, output unit 101, and control output unit 102.

Four distributed controllers 2 correspond one-to-one to four motors 3. Distributed controllers 2 control corresponding motors 3, respectively.

Motion detector 9 detects information about the motion of moving body 1. A detection signal indicating the detection result of motion detector 9 is output to host unit 6 and intermediate unit 7. Examples of motion detector 9 include a gyroscope sensor, an acceleration sensor, a geomagnetic sensor, a global positioning system (GPS) sensor, and an atmospheric pressure sensor. The gyroscope sensor detects an attitude (inclination) of moving body 1. The acceleration sensor detects acceleration of moving body 1. The geomagnetic sensor detects an azimuth of moving body 1. The GPS sensor detects a current position of moving body 1. The atmospheric pressure sensor detects an atmospheric pressure at the current position of moving body 1.

Motion detector 9 calculates coordinates, a speed, an angle, and an angular velocity of moving body 1 based on outputs from the respective sensors such as the gyroscope sensor.

The coordinates of moving body 1 calculated by motion detector 9 are an X coordinate, a Y coordinate, and a Z coordinate. Here, in a case where moving body 1 is not inclined and the rotational axes of four propellers 4 are parallel to a vertical direction, directions of the roll axis, the pitch axis, and the yaw axis are defined as X, Y, and Z axis directions, respectively. The speed of moving body 1 calculated by motion detector 9 includes a speed in the X-axis direction and a speed in the Y-axis direction.

The angle of moving body 1 calculated by motion detector 9 is a rotational position of moving body 1 around the roll axis, the pitch axis, and the yaw axis (X, Y, and Z axes). The angular velocity of moving body 1 calculated by motion detector 9 includes angular velocities of rotation about the roll axis, the pitch axis, and the yaw axis.

Host unit 6 transmits a first instruction signal related to the control of four motors 3 to intermediate unit 7. The first instruction signal includes, for example, at least one of a position instruction signal for instructing the position (altitude and horizontal coordinates) of moving body main body 5 and an attitude instruction signal for instructing the attitude (angle) of moving body main body 5. That is, motor controller 100 (intermediate unit 7) has a function of controlling four (three or more) motors 3 further based on the attitude instruction signal in addition to at least one of the group of four (three or more) torque detection values T1 to T4 and the group of four (three or more) thrust detection values F1 to F4.

For example, when moving body 1 is stopped on the ground, host unit 6 receives information about coordinates of a destination of moving body 1 from a device outside moving body 1 by wireless communication or wired communication. For example, during the flight of moving body 1, host unit 6 receives update information about the coordinates of the destination of moving body 1 from the device outside moving body 1 by wireless communication. Host unit 6 generates a position instruction signal and an attitude instruction signal based on the information about the coordinates of the destination of moving body 1 and the detection signals of the gyroscope sensor, the GPS sensor, and the like of motion detector 9. As a result, host unit 6 causes four motors 3 to move moving body 1 to the destination.

Intermediate unit 7 generates second instruction signals based on the first instruction signal received from host unit 6 and the information about the motion of moving body 1 received from motion detector 9. The second instruction signals each include, for example, current target value Ir1 (or Ir2, Ir3, Ir4) of each of four motors 3. Intermediate unit 7 generates four second instruction signals and transmits the four second instruction signals to four distributed controllers 2, respectively. The four second indication signals may vary. That is, intermediate unit 7 can issue different instructions to four motors 3 via four distributed controllers 2. As a result, the numbers of revolutions of four motors 3 can be controlled, and thus the attitude, the moving direction, the moving speed, the acceleration, and the like of moving body 1 can be controlled.

That is, intermediate unit 7 (master unit) generates control signals (second instruction signals) for controlling four (three or more) motors 3, based on at least one of the group of four (three or more) torque detection values T1 to T4 and the group of four (three or more) thrust detection values F1 to F4. Intermediate unit 7 transmits the generated control signals to four (three or more) distributed controllers 2, respectively.

The parameters related to the force applied to moving body main body 5 include acceleration in the yaw axis (Z axis) direction, an angular velocity around the roll axis, an angular velocity around the pitch axis, and an angular velocity around the yaw axis. The acceleration in the yaw axis direction is detected by the acceleration sensor of motion detector 9. The angular velocity around the roll axis, the angular velocity around the pitch axis, and the angular velocity around the yaw axis are detected by the gyroscope sensor of motion detector 9. Intermediate unit 7 calculates target values of the four parameters based on the first instruction signal transmitted from host unit 6, and performs feedback control such that the four parameters approach the target values.

Intermediate unit 7 includes altitude controller 71, position controllers 72, 73, speed controllers 74, 75, angle controllers 76, 77, 78, and angular velocity controllers 79, 80, 81. Each of them performs feedback control. Intermediate unit 7 further includes acquisition unit 82.

Altitude controller 71 receives a signal including a target value (in FIG. 2, denoted by Zr) of the Z coordinate (altitude) of moving body 1 as the first instruction signal from host unit 6. Altitude controller 71 receives the calculated value of the Z coordinate (in FIG. 2, denoted by Z) of moving body 1 calculated by motion detector 9. Altitude controller 71 determines target value Tr of the sum of the torques of four motors 3 such that a difference between the target value of the Z coordinate and the calculated value converges within a predetermined range. Target value Tr is a vector amount.

Position controller 72 receives a signal including a target value (in FIG. 2, denoted by Xr) of the X coordinate of moving body 1 as the first instruction signal from host unit 6. Position controller 72 receives a calculated value of the X coordinate (in FIG. 2, denoted by X) of moving body 1 calculated by motion detector 9. Position controller 72 determines target value Vxr of the speed in the X-axis direction such that a difference between the target value of the X coordinate and the calculated value converges within a predetermined range.

Position controller 73 receives a signal including a target value (in FIG. 2, denoted by Yr) of the Y coordinate of moving body 1 as the first instruction signal from host unit 6. Position controller 73 receives a calculated value of the Y coordinate (in FIG. 2, denoted by Y) of moving body 1 calculated by motion detector 9. Position controller 72 determines target value Vyr of the speed in the Y-axis direction such that a difference between the target value of the Y coordinate and the calculated value converges within a predetermined range.

Speed controller 74 receives target value Vxr of the speed in the X-axis direction determined by position controller 72 and calculated value Vx of the speed in the X-axis direction calculated by motion detector 9. Speed controller 74 determines target value θr of the angle around the Y axis such that a difference between target value Vxr and calculated value Vx converges within a predetermined range. Rotation of moving body main body 5 about the Y axis adjusts the speed of moving body main body 5 in the X-axis direction.

Speed controller 75 receives target value Vyr of the speed in the Y-axis direction determined by position controller 73 and calculated value Vy of the speed in the Y-axis direction calculated by motion detector 9. Speed controller 75 determines target value ϕr of the angle around the X axis such that a difference between target value Vyr and calculated value Vy converges within a predetermined range. Rotation of moving body main body 5 about the X axis adjusts the speed of moving body main body 5 in the Y-axis direction.

Angle controller 76 receives target value θr of the angle around the Y axis determined by speed controller 74 and a calculated value (in FIG. 2, denoted by θ) of the angle around the Y axis calculated by motion detector 9. Angle controller 76 determines target value ωθr of the angular velocity of rotation about the Y axis such that a difference between target value θr and calculated value θ converges within a predetermined range.

Angle controller 77 receives target value ϕr of the angle around the X axis determined by speed controller 75 and a calculated value (in FIG. 2, denoted by ϕ) of the angle around the X axis calculated by motion detector 9. Angle controller 77 determines target value ωϕr of the angular velocity of rotation about the X axis so that a difference between target value ϕr and calculated value ϕ converges within a predetermined range.

Angle controller 78 receives a signal including a target value (in FIG. 2, denoted by ψr) of the angle around the Z axis as the first instruction signal from host unit 6. Angle controller 78 receives a calculated value (in FIG. 2, denoted by ψ) of the angle around the Z axis calculated by motion detector 9. Angle controller 78 determines target value ωψr of the angular velocity of rotation about the Z axis such that a difference between target value ψr and calculated value ψ converges within a predetermined range.

Angular velocity controller 79 receives target value ωθr of the angular velocity of rotation about the Y axis determined by angle controller 76 and calculated value ωθ of the angular velocity of rotation about the Y axis calculated by motion detector 9. Angular velocity controller 79 determines target value τθr of the angular acceleration of rotation about the Y axis such that a difference between target value ωθr and calculated value ωθ converges within a predetermined range.

Angular velocity controller 80 receives target value ωϕr of the angular velocity of rotation about the X axis determined by angle controller 77 and calculated value ωϕ of the angular velocity of rotation about the X axis calculated by motion detector 9. Angular velocity controller 80 determines target value τϕr of the angular acceleration of rotation about the X axis such that a difference between target value ωϕr and calculated value ωϕ converges within a predetermined range.

Angular velocity controller 81 receives target value ωψr of the angular velocity of rotation about the Z axis determined by angle controller 78 and calculated value ωψ of the angular velocity of rotation about the Z axis calculated by motion detector 9. Angular velocity controller 80 determines target value τψr of the angular acceleration of rotation about the Z axis such that a difference between target value ωψr and calculated value ωψ converges within a predetermined range.

Acquisition unit 82 generates four current target values Ir1, Ir2, Ir3, Ir4 based on target value Tr of the sum of the torques of four motors 3 determined by altitude controller 71 and target values τϕr, τθr, τψr of the angular accelerations of rotation about the X, Y, and Z axes determined by angular velocity controllers 79, 80, 81. Four current target values Ir1, Ir2, Ir3, Ir4 correspond one-to-one to four distributed controllers 2. Acquisition unit 82 outputs the corresponding current target value to each of four distributed controllers 2. Each of four distributed controllers 2 conducts control such that a current having magnitude substantially equal to the corresponding current target value flows through each motor 3. Thus, the actual measurement values approach target values Tr, τϕr, τθr, τψr, respectively.

As illustrated in FIG. 1, acquisition unit 82 includes thrust controller 821 and torque controllers 822, 823, 824. Acquisition unit 82 determines four current target values Ir1, Ir2, Ir3, Ir4 through feedback control.

Thrust controller 821 receives target value Tr of a sum of the torques of four motors 3 determined by altitude controller 71. Thrust controller 821 receives thrust detection values F1 to F4 of motors 3 calculated by thrust calculators 28, described later, of four distributed controllers 2. Thrust detection values F1 to F4 correspond to thrusts generated by four propellers 4, respectively. Thrust controller 821 calculates a thrust target value (target value of the thrust of moving body main body 5) corresponding to target value Tr, based on target value Tr of the sum of the torques of four motors 3. Acquisition unit 82 determines four current target values Ir1, Ir2, Ir3, Ir4 such that a difference between the thrust target value calculated by thrust controller 821 and the sum of thrust detection values F1 to F4 (main body thrust values) converges within a first predetermined range.

Acquisition unit 82 calculates a main body thrust value corresponding to the thrust of moving body main body 5, based on four (three or more) thrust detection values F1 to F4. Motor controller 100 controls four (three or more) motors 3 based on at least the main body thrust value.

Torque controllers 822, 823, 824 receive target values τθr, τϕr, τψr of angular acceleration of rotation about the Y, X, and Z axes determined by angular velocity controllers 79 to 81, respectively. Acquisition unit 82 receives torque detection values T1 to T4 of motors 3 calculated by calculators 26, described later, of four distributed controllers 2. Acquisition unit 82 calculates detection values of angular velocities of rotation about the X, Y, and Z axes, based on torque detection values T1 to T4. For example, acquisition unit 82 calculates the detection values of the angular velocities of rotation about the X, Y, and Z axes, based on torque detection values T1 to T4 using an arithmetic expression. That is, an arithmetic expression can express how much torque detection values T1 to T4 contribute to the angular velocities of rotation about the X, Y, and Z axes, respectively, in accordance with the arrangement of four propellers 4. The arithmetic expression is stored in, for example, a memory of motor control device 10. Note that the relationship between torque detection values T1 to T4 and the angular velocities of the rotation about the X, Y, and Z axes may be stored in the memory of motor control device 10 in a form of a data table.

The detection values of the angular velocities of rotation about the X, Y, and Z axes calculated based on torque detection values T1 to T4 in acquisition unit 82 correspond to a main body torque value. The main body torque value is a vector amount. The main body torque value corresponds to the sum of torques (torque detection values T1 to T4) generated between four (three or more) motors 3 and moving body main body 5. Motor controller 100 controls four (three or more) motors 3 based on at least the main body torque value.

More specifically, acquisition unit 82 determines four current target values Ir1, Ir2, Ir3, Ir4 such that each of differences between the detection values (main body torque values) of the angular velocities of rotation about the X, Y, and Z axes and target values τϕr, τθr, τψr converges within a second predetermined range. That is, acquisition unit 82 determines four current target values Ir1, Ir2, Ir3, Ir4 such that the detection value of the angular velocity of rotation about the X axis approaches target value τϕr, the detection value of the angular velocity of rotation about the Y axis approaches target value τθr, and the detection value of the angular velocity of rotation about the Z axis approaches target value τψr.

In short, acquisition unit 82 determines four current target values Ir1, Ir2, Ir3, Ir4 such that the difference between the sum of thrust detection values F1 to F4 and the thrust target value calculated by thrust controller 821 converges within the first predetermined range, and each of the differences between the detection values of the angular velocities of rotation about the X, Y, and Z axes and target values τϕr, τθr, τψr converges within the second predetermined range. The first predetermined range is, for example, a range between -3% and +3% of the thrust target value. The second predetermined range is, for example, a range between -3% and +3% of each of target values τϕr, τθr, τψr.

Four torque detection values T1 to T4 and four thrust detection values F1 to F4 corresponding to four motors 3, respectively, are collected in acquisition unit 82. Accordingly, acquisition unit 82 determines four current target values Ir1, Ir2, Ir3, Ir4. Therefore, acquisition unit 82 can adjust the ratios of the numbers of revolutions of four motors 3 such that the total torque (main body torque value) and the total thrust (main body thrust value) of moving body main body 5 approach the target values.

Here, the torque and the thrust are weighted by determining a width (a difference between an upper limit value and a lower limit value) of each of the first predetermined range and the second predetermined range. As the weighting of the thrust is larger, the sum of thrust detection values F1 to F4 approaches the thrust target value calculated by thrust controller 821. As the torque weighting increases, the detection values of the angular velocities of rotation about the X, Y, and Z axes approach target values τϕr, τθr, and τψr, respectively. As the width of the first predetermined range is smaller, the weighting of the thrust is larger, and the altitude of moving body 1 can be controlled more accurately. As the width of the second predetermined range is smaller, the weighting of the torque is larger, and the attitude of moving body 1 can be controlled more accurately. The weighting of the torque and the thrust are appropriately determined depending on the design.

A correlation is established between the torques generated between propellers 4 and motors 3, the thrusts generated by propellers 4, and the numbers of revolutions of the motors 3. Note that the correlation between the torques, the thrusts, and the numbers of revolutions changes due to the influence of wind around moving body 1. The torques generated between propellers 4 and motors 3 are proportional to, for example, the squares of the numbers of revolutions of motors 3. The thrusts generated by propellers 4 are proportional to, for example, the squares of the numbers of revolutions of motors 3. Motor control device 10 performs feedback control regarding the torques and the thrusts to control the numbers of revolutions of motors 3.

The following description will focus on one of four distributed controllers 2. As illustrated in FIG. 1, each distributed controller 2 includes current controller 21, motor rotation measurement unit 23, power source circuit 24, current sensor 25, calculator 26, pressure sensor 27, and thrust calculator 28.

Current controller 21 receives current target value Ir1 determined by acquisition unit 82 of intermediate unit 7 and measurement value I1 of the current flowing through motor 3 measured by current sensor 25. Current controller 21 performs current control for controlling the current flowing through motor 3, based on the current flowing through motor 3 (measurement value I1). More specifically, current controller 21 controls the current supplied to motor 3 such that a difference between current target value Ir1 and measurement value I1 converges within a predetermined range. That is, current controller 21 performs feedback control such that measurement value I1 approaches current target value Ir1.

Power source circuit 24 is, for example, a switching power source circuit including a switching element. Power source circuit 24 applies a current to motor 3. Distributed controller 2 controls the current applied from power source circuit 24 to motor 3, and thus controls motor 3. As a method of controlling the current applied to motor 3, for example, pulse width modulation (PWM) control is used. That is, current controller 21 controls the operation of the switching element of power source circuit 24 using PWM signal P1 generated based on current target value Ir1 and measurement value I1. Thus, current controller 21 controls the current applied to motor 3.

Motor rotation measurement unit 23, current sensor 25, and pressure sensor 27 acquire information about motor 3.

Motor rotation measurement unit 23 measures rotation angle A1 of motor 3. Motor rotation measurement unit 23 includes, for example, a photoelectric encoder or a magnetic encoder.

Current sensor 25 measures the current flowing through motor 3. More specifically, three-phase currents (U-phase current, V-phase current, and W-phase current) are supplied from power source circuit 24 to motor 3. Current sensor 25 measures currents of at least two phases.

Pressure sensor 27 detects pressure generated between motor 3 and propeller 4. Pressure sensor 27 receives an axial force generated from a rotating shaft of a rotor of motor 3 along with rotation of the rotating shaft, and detects this force. As pressure sensor 27, for example, a resistance strain gauge, a semiconductor pressure sensor, or the like can be used. Examples of the semiconductor pressure sensor include a piezoresistive pressure sensor and a capacitive pressure sensor.

Calculator 26 calculates a d-axis current and a q-axis current flowing through motor 3. More specifically, calculator 26 coordinate-converts the currents of at least two phases measured by current sensor 25, based on rotation angle A1 of motor 3 measured by motor rotation measurement unit 23, and converts the currents into a current measurement value of a magnetic field component (d-axis current) and a current measurement value of a torque component (q-axis current). Torque detection value T1, which is a value corresponding to the torque generated between propeller 4 and motor 3, is a current measurement value of the torque component (q-axis current) calculated by calculator 26. That is, calculator 26 calculates torque detection value T1 based on the current flowing through motor 3. The relationship between the currents of at least two-phases detected by current sensor 25 and torque detection value T1 is stored in the memory of distributed controller 2 in the form of, for example, an arithmetic expression or a data table.

Thrust calculator 28 calculates the thrust (thrust detection value F1) generated by propeller 4, based on the detection value of the pressure that is generated between motor 3 and propeller 4 and is detected by pressure sensor 27. The relationship between the pressure detection value and thrust detection value F1 is stored in the memory of motor control device 10 in the form of, for example, an arithmetic expression or a data table. As the pressure detection value is larger, thrust detection value F1 calculated by thrust calculator 28 increases.

Output unit 101 of intermediate unit 7 outputs at least one of the group of the plurality of (three or more) torque detection values T1 to T4 and the group of the plurality of (three or more) thrust detection values F1 to F4. For example, output unit 101 outputs (stores) the plurality of torque detection values T1 to T4 and the plurality of thrust detection values F1 to F4 to (in) the memory of motor controller 100. Output unit 101 includes, for example, a wireless communication device, and outputs (transmits) a signal including the plurality of torque detection values T1 to T4 and the plurality of thrust detection values F1 to F4 to an external device through wireless communication.

Control output unit 102 of intermediate unit 7 outputs information about control content of motor controller 100 for the plurality of (three or more) motors 3. The information about the control content of motor controller 100 is, for example, current target values Ir1 to Ir4 and other various target values. For example, control output unit 102 outputs (stores) information about the control content of motor controller 100 to (in) the memory of motor controller 100. Control output unit 102 includes, for example, a wireless communication device, and outputs (transmits) information about the control content of motor controller 100 to an external device through wireless communication. Note that control output unit 102 and output unit 101 may share some parts or all parts of the configuration.

### (3) Operation flow

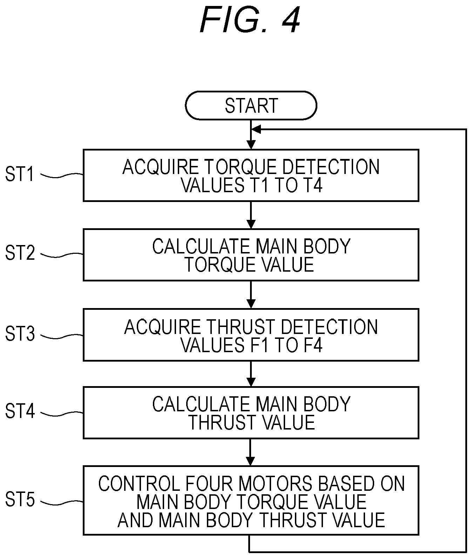

An operation flow of motor control device 10 will be described with reference to FIG. 4. FIG. 4 is a flowchart illustrating an operation example of moving body 1 according to the exemplary embodiment.

Four distributed controllers 2 of motor control device 10 acquire torque detection values T1 to T4 corresponding to the torques generated between four motors 3 and four propellers 4, respectively (step ST1). Acquisition unit 82 calculates a main body torque value corresponding to the sum of the torques generated between four motors 3 and moving body main body 5, based on torque detection values T1 to T4 (step ST2). Further, four distributed controllers 2 acquire thrust detection values F1 to F4 corresponding to the thrusts generated by four propellers 4 (step ST3). Acquisition unit 82 calculates a main body thrust value corresponding to the thrust of moving body main body 5, based on thrust detection values F1 to F4 (step ST4). Motor controller 100 controls four motors 3 based on at least one (in the exemplary embodiment, both) of the main body torque value and the main body thrust value calculated by acquisition unit 82 (step ST5).

### (4) Summary

In motor control device 10 described above, four motors 3 are controlled based on at least one of the group of four torque detection values T1 to T4 and the group of four thrust detection values F1 to F4. Therefore, control responsiveness of four motors 3 can be improved as compared with a case where four motors 3 are controlled based on the detection results of the attitude, the speed, and the like of moving body 1.

In a case where four torque detection values T1 to T4 and four thrust detection values F1 to F4 are calculated based on the numbers of revolutions of motors 3, the correlation between the numbers of revolutions of motors 3, four torque detection values T1 to T4, and four thrust detection values F1 to F4 may change due to the influence of wind around moving body 1, and calculation accuracy may be deteriorated. In motor control device 10, four torque detection values T1 to T4 are calculated based on the currents measured by current sensors 25. Further, four thrust detection values F1 to F4 are calculated based on the detection values of the pressures measured by pressure sensors 27. Thus, the influence of the wind upon torque detection values T1 to T4 and thrust detection values F1 to F4 can be reduced. Therefore, control accuracy of motors 3 can be improved.

### (5) First modification

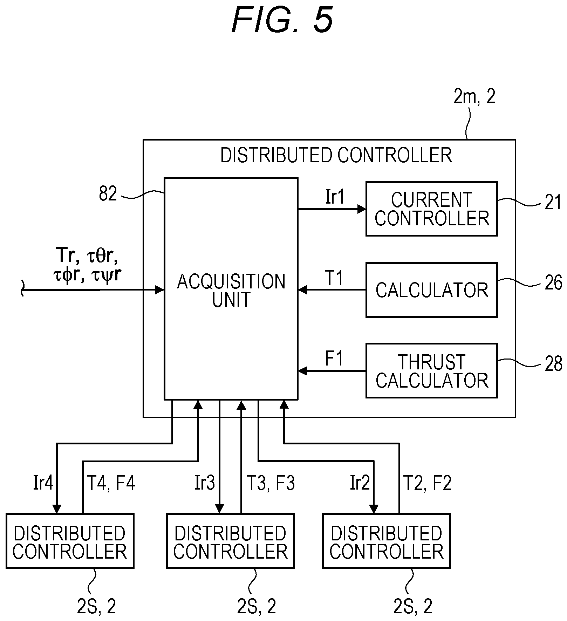

Hereinafter, motor control device 10 according to a first modification of the exemplary embodiment will be described with reference to FIG. 5. FIG. 5 is a block diagram of main components of a moving body according to the first modification. The same reference numerals are given to the same components as those of the exemplary embodiment, and the description thereof will be omitted.

Motor controller 100 of the first modification includes four (three or more) distributed controllers 2. Hereinafter, one distributed controller 2 having a function of generating control signals among four distributed controllers 2 is referred to as "distributed controller 2m". Remaining three distributed controllers 2 are each referred to as "distributed controller 2s".

Four distributed controllers 2 have one-to-one correspondence to four (three or more) motors 3, and control corresponding motors 3. One (distributed controller 2m) of four (three or more) distributed controllers 2 generates control signals based on at least one of a group of four (three or more) torque detection values T1 to T4 and a group of four (three or more) thrust detection values F1 to F4, and transmits the control signals to remaining distributed controllers 2 (three distributed controllers 2s), respectively. The control signals are signals for controlling motors 3 (three motors 3) corresponding to remaining distributed controllers 2 (three distributed controllers 2s), respectively.

More specifically, distributed controller 2m transmits the control signal including a current target value corresponding to distributed controller 2s as a transmission destination among three current target values Ir2, Ir3, Ir4 to each of distributed controllers 2s.

Distributed controller 2m further has the function of acquisition unit 82 according to the exemplary embodiment in addition to the function of distributed controllers 2 according to the exemplary embodiment. Distributed controller 2m causes acquisition unit 82 to acquire four torque detection values T1 to T4 and four thrust detection values F1 to F4. That is, acquisition unit 82 acquires four torque detection values T1 to T4 from four calculators 26 included in distributed controller 2m and three distributed controllers 2s. Acquisition unit 82 acquires four thrust detection values F1 to F4 from four thrust calculators 28 included in distributed controller 2m and three distributed controllers 2s. As in the exemplary embodiment, acquisition unit 82 determines four current target values Ir1, Ir2, Ir3, Ir4 through feedback control using target values Tr, τϕr, τθr, τψr, four torque detection values T1 to T4, and four thrust detection values F1 to F4.

Distributed controller 2m controls four motors 3 using four current target values Ir1, Ir2, Ir3, Ir4 determined by acquisition unit 82. That is, distributed controller 2m outputs current target value Ir1 to current controller 21 of distributed controller 2m. Distributed controller 2m outputs remaining three current target values Ir2, Ir3, Ir4 to current controllers 21 of corresponding distributed controllers 2s, respectively. Distributed controllers 2m, 2s control four motors 3, respectively, based on corresponding current target value Ir1, Ir2, Ir3, or Ir4.

According to the first modification, a processing amount of each distributed controller 2s that does not make the determination based on at least one of the group of four torque detection values T1 to T4 and the group of four thrust detection values F1 to F4 can be reduced as compared with the case where each of four distributed controllers 2 makes the determination.

### (6) Second modification

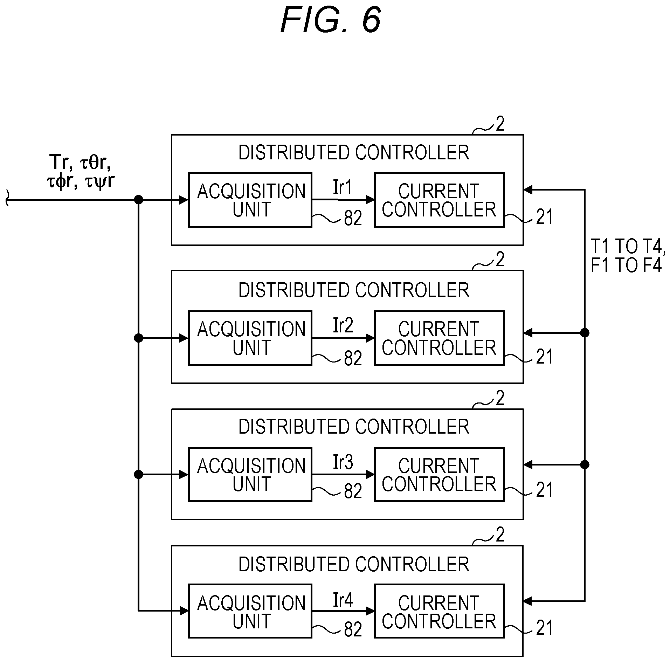

Hereinafter, motor control device 10 according to a second modification of the exemplary embodiment will be described with reference to FIG. 6. FIG. 6 is a block diagram of main components of a moving body according to the second modification. The same reference numerals are given to the same components as those of the exemplary embodiment, and the description thereof will be omitted.

Motor controller 100 according to the present modification includes four (three or more) distributed controllers 2. Four (three or more) distributed controllers 2 have one-to-one correspondence to four (three or more) motors 3, and control corresponding motors 3, respectively. Four (three or more) distributed controllers 2 control corresponding motors 3, respectively, based on at least one of a group of four (three or more) torque detection values T1 to T4 and a group of four (three or more) thrust detection values F1 to F4.

Each of four distributed controllers 2 further has the function of acquisition unit 82 according to the exemplary embodiment in addition to the function of distributed controller 2 according to the exemplary embodiment. Four distributed controllers 2 each cause acquisition unit 82 to acquire four torque detection values T1 to T4 and four thrust detection values F1 to F4. That is, four distributed controllers 2 communicate with each other to share four torque detection values T1 to T4 and four thrust detection values F1 to F4.

Four distributed controllers 2 acquire target values Tr, τϕr, τθr, τψr, respectively.

As in the exemplary embodiment, acquisition unit 82 determines four current target values Ir1, Ir2, Ir3, Ir4 through feedback control using target values Tr, τϕr, τθr, τψr, four torque detection values T1 to T4, and four thrust detection values F1 to F4. Each distributed controller 2 may cause acquisition unit 82 to determine at least one current target value corresponding to itself (distributed controller 2) among four current target values Ir1, Ir2, Ir3, Ir4. Four distributed controllers 2 determine four current target values Ir1, Ir2, Ir3, Ir4, respectively, in parallel processing.

Each distributed controller 2 outputs the corresponding current target value determined by acquisition unit 82 to current controller 21. Each current controller 21 controls corresponding motor 3 based on the corresponding current target value. Thus, motor controller 100 controls four motors 3.

According to the second modification, the processing based on at least one of the group of four torque detection values T1 to T4 and the group of four thrust detection values F1 to F4 can be distributed to four distributed controllers 2. As a result, control responsiveness of four motors 3 can be further improved.

### (6) Other modifications

Other modifications of the exemplary embodiment will be listed below. The following modifications may be achieved by appropriately combining them.

At least some of functions similar to those of motor control device 10 and moving body 1 may be embodied by a motor control method, a (computer) program, a non-transitory recording medium recording the program, or the like.

A motor control method according to one aspect includes a first step and a second step. In the first step, at least one of a group of three or more torque detection values T1 to T4 and a group of three or more thrust detection values F1 to F4 is acquired. Three or more torque detection values T1 to T4 correspond to torques generated between three or more motors 3 mounted on moving body main body 5 and three or more propellers 4, respectively. Three or more propellers 4 correspond one-to-one to three or more motors 3, and rotate through forces applied from corresponding motors 3 to generate thrusts. Three or more thrust detection values F1 to F4 correspond to the thrusts generated by three or more propellers 4, respectively. In the second step, three or more motors 3 are controlled based on at least one of the group of three or more torque detection values T1 to T4 and the group of three or more thrust detection values F1 to F4 acquired in the first step.

A program according to one aspect is a program for causing one or more processors to execute the motor control method described above.

Motor control device 10 and moving body 1 in the present disclosure include a computer system. The computer system mainly includes a processor and a memory as hardware. At least some of the functions as motor control device 10 and moving body 1 in the present disclosure are achieved by the processor executing the program recorded in the memory of the computer system. The program may be recorded in advance in the memory of the computer system, may be provided through a telecommunication line, or may be provided in a manner that it is recorded in a non-transitory recording medium such as a memory card, an optical disk, or a hard disk drive readable by the computer system. The processor of the computer system includes one or a plurality of electronic circuits including a semiconductor integrated circuit (IC) or a large-scale integration (LSI) circuit. The integrated circuit such as an IC or LSI circuit herein is called differently depending on the degree of integration, and includes a system LSI circuit, a very large-scale integration (VLSI) circuit, or an ultra-large-scale integration (ULSI) circuit. Further, a field-programmable gate array (FPGA) programmed after the manufacture of the LSI or a logic device capable of reconfiguring a bonding relationship inside the LSI or reconfiguring a circuit section inside the LSI can also be used as the processor. The plurality of electronic circuits may be integrated into one chip or may be distributed on a plurality of chips. The plurality of chips may be integrated in one device or may be distributed in a plurality of devices. The computer system herein includes a microcontroller having one or more processors and one or more memories. Therefore, the microcontroller is also configured by one or a plurality of electronic circuits including a semiconductor integrated circuit or a large-scale integration circuit.

The configuration in which the plurality of functions in motor control device 10 and moving body 1 are integrated in one housing is not essential for motor control device 10 and moving body 1. The components of motor control device 10 and moving body 1 may be distributed in a plurality of housings. Furthermore, at least some of the functions of motor control device 10 and moving body 1, for example, some of the functions of acquisition unit 82 may be achieved by a cloud (cloud computing) or the like.

On the contrary, in the exemplary embodiment, at least some of the functions of motor control device 10 and moving body 1 distributed in a plurality of devices may be integrated in one housing. For example, some of the functions of motor control device 10 and moving body 1 distributed in intermediate unit 7 and the plurality of distributed controllers 2 may be integrated in one housing.

Motor controller 100 may perform voltage control for controlling a voltage applied to motors 3, based on the voltages applied to motors 3. Specifically, the voltages applied to motors 3 are voltages applied to windings of motors 3. In one aspect in which motor controller 100 performs the voltage control, voltage detection values of the voltages applied to motors 3 are acquired by a voltage sensor included in moving body 1. Distributed controllers 2 each include a voltage controller instead of current controller 21. Acquisition unit 82 of intermediate unit 7 transmits voltage instruction signals including target values (voltage target values) of the voltages applied to motors 3 to the voltage controllers, respectively. The voltage controllers control the operations of the switching elements of power source circuits 24, respectively, such that differences between the voltage target values and the voltage detection values converge within a predetermined range. Thus, the voltage controllers control the currents applied to motors 3. In other words, motor controller 100 performs feedback control such that the voltage detection values approach the voltage target values. In other words, motor controller 100 has a function of controlling four (three or more) motors 3 based on the voltage instruction signals instructing the applied voltages of four (three or more) motors 3.

Motor controller 100 may perform feedback control such that four (three or more) torque detection values T1 to T4 approach the corresponding torque target values, respectively. The torque target values of motors 3 are determined by acquisition unit 82 based on, for example, target value Tr of the thrust of moving body 1 and target values τϕr, τθr, τψr of angular acceleration.

Motor controller 100 may perform feedback control such that four (three or more) thrust detection values F1 to F4 approach the corresponding thrust target values, respectively. The thrust target values of motors 3 are determined by acquisition unit 82 based on, for example, target value Tr of the thrust of moving body 1 and target values τϕr, τθr, τψr of the angular acceleration.

Motor controller 100 may have a function of controlling three or more motors 3 based on rotation instruction signals instructing the numbers of revolutions of four (three or more) motors 3. For example, acquisition unit 82 may generate rotation instruction signals based on target values Tr, τϕr, τθr, τψr and transmit the rotation instruction signals to four (three or more) distributed controllers 2, respectively.

Moving body 1 is not limited to a drone (aerial drone), and may be, for example, a radio-controlled flying machine. Moving body 1 is not limited to a flying object such as a drone or a radio-controlled flying machine. Moving body 1 may be a device that moves on water or under water, such as a surface water drone, an underwater drone, a surface water radio-controlled flying machine, or a radio-controlled submarine (underwater radio-controlled machine).

A number of propellers 4 and a number of motors 3 included in moving body 1 are not limited to four. The number of propellers 4 and the number of motors 3 of moving body 1 may be, for example, three, six, or eight.

A number of distributed controllers 2 included in moving body 1 is not limited to four. The number of distributed controllers 2 may be different from the number of propellers 4 and the number of motors 3. One distributed controller 2 may control the plurality of motors 3.

Motor control device 10 may include at least acquisition unit 82 and motor controller 100. For example, current sensor 25 and pressure sensor 27 may be provided in moving body 1 as external components of motor control device 10.

Acquisition unit 82 may control four (three or more) motors 3 based on at least one of the group of four (three or more) torque detection values T1 to T4 and the group of four (three or more) thrust detection values F1 to F4 acquired from the external component of motor control device 10.

Moving body 1 may include a torque sensor. Calculator 26 may calculate torque detection values T1 to T4 based on the output from the torque sensor instead of the output from current sensor 25. The torque sensor here measures operation torques of motors 3. The torque sensor is, for example, a magnetostrictive strain sensor capable of detecting a torsional strain. The magnetostrictive strain sensor detects a change in permeability according to a strain generated by application of torques to the rotating shafts of motors 3 through coils installed in non-rotating portions of motors 3, and outputs a voltage signal proportional to the strain.

The operation of motor controller 100 based on torque detection values T1 to T4 is not limited to feedback control in which torque detection values T1 to T4 approach the corresponding torque target values, respectively. The operation of motor controller 100 based on thrust detection values F1 to F4 is not limited to feedback control in which thrust detection values F1 to F4 approach the corresponding thrust target values, respectively. For example, when a specific condition such as a wind speed around moving body 1 exceeding a threshold is satisfied, motor controller 100 may decrease the numbers of revolutions of motors 3 such that torque detection values T1 to T4 and thrust detection values F1 to F4 are decreased with the lapse of time in order to cause moving body 1 to make an emergency landing. The phrase "the numbers of revolutions of motors 3 are decreased" herein includes setting the numbers of revolutions of motors 3 to zero (that is, motors 3 are stopped). The wind speed around moving body 1 may be detected by, for example, a wind speed sensor included in moving body 1.

Motor controller 100 may set limit values of torque detection values T1 to T4 when the specific condition is satisfied. For example, in certain motor 3, when the torque target value is larger than the limit value, motor controller 100 may control motors 3 such that torque detection value T1 (or T2, T3, T4) approaches the limit value instead of the torque target value. When the specific condition is no longer satisfied, motor controller 100 cancels the setting of the limit value. As a result, a room for increasing the torque of motor 3 remains when the specific condition is no longer satisfied, and thus control flexibility of motor 3 can be enhanced. For example, when a specific condition in which moving body 1 enters turbulence is satisfied, the limit values are set, and after moving body 1 escapes from the turbulence, the setting of the limit values is canceled and the torques of four motors 3 are appropriately increased or decreased for respective motors 3. As a result, the attitude of moving body 1 can be corrected. Similarly, motor controller 100 may set limit values of thrust detection values F1 to F4 when the specific condition is satisfied. A determination may be made whether moving body 1 enters the turbulence, based on, for example, a detection result of an air flow sensor provided in moving body 1. The air flow sensor detects a wind speed and a wind direction around moving body 1.

Motor controller 100 may control motors 3 further based on the output from the gyroscope sensor of motion detector 9. For example, motor controller 100 determines the magnitude of the disturbance of the attitude of moving body 1 based on at least one of the group of torque detection values T1 to T4 and the group of thrust detection values F1 to F4. When determining that the magnitude of the disturbance of the attitude of moving body 1 exceeds the predetermined value, based on at least one of the group of torque detection values T1 to T4 and the group of thrust detection values F1 to F4, motor controller 100 first controls motors 3 based on at least one of the group of torque detection values T1 to T4 and the group of thrust detection values F1 to F4. Thereafter, when a predetermined time has elapsed, motor controller 100 controls motors 3 based on the output from the gyroscope sensor among torque detection values T1 to T4, thrust detection values F1 to F4, and the gyroscope sensor. In short, when detecting the disturbance of the attitude of moving body 1 based on at least one of the group of torque detection values T1 to T4 and the group of thrust detection values F1 to F4, motor controller 100 first corrects the attitude based on at least one of the group of torque detection values T1 to T4 and the group of thrust detection values F1 to F4. Thereafter, after the timing at which the disturbance of the attitude is reflected in the output from the gyroscope sensor, motor controller 100 corrects the attitude based on the output from the gyroscope sensor. As a result, control accuracy of motors 3 can be improved.

Motor controller 100 may control three or more motors 3 based only on the group of three or more torque detection values T1 to T4 out of the group of three or more torque detection values T1 to T4 and the group of three or more thrust detection values F1 to F4. Motor controller 100 may control three or more motors 3 based on calculated value ωϕ of the angular velocity of rotation of moving body main body 5 about the X axis and calculated value ωθ of the angular velocity of rotation of moving body main body 5 about the Y axis instead of the group of three or more thrust detection values F1 to F4.

Motor controller 100 may control three or more motors 3 based only on the group of three or more thrust detection values F1 to F4 out of the group of three or more torque detection values T1 to T4 and the group of three or more thrust detection values F1 to F4. Furthermore, motor controller 100 may control three or more motors 3 based on the output from the gyroscope sensor instead of the group of three or more torque detection values T1 to T4.

### (7) General overview

The following aspects are disclosed based on the above-described exemplary embodiment and the like.

Motor control device (10) according to a first aspect includes acquisition unit (82) and motor controller (100). Acquisition unit (82) acquires at least one of a group of three or more torque detection values (T1 to T4) and a group of three or more thrust detection values (F1 to F4). Three or more torque detection values (T1 to T4) correspond to torques generated between three or more motors (3) and three or more propellers (4) mounted on moving body main body (5), respectively. Three or more propellers (4) correspond one-to-one to three or more motors (3), and rotate through forces applied from corresponding motors (3) to generate thrusts. Three or more thrust detection values (F1 to F4) correspond to thrusts generated by three or more propellers (4), respectively. Motor controller (100) controls three or more motors (3) based on at least one of the group of three or more torque detection values (T1 to T4) and the group of three or more thrust detection values (F1 to F4).

According to the above configuration, after at least the torques generated between propellers (4) and motors (3) or the thrusts generated by propellers (4) change, the control of motors (3) can be changed based on at least changed one of the group of three or more torque detection values (T1 to T4) and the group of three or more thrust detection values (F1 to F4). That is, the control of motors (3) can be changed even before the attitude, speed, and the like of moving body (1) change as a result of the change in at least the torques or the thrusts. Therefore, control responsiveness of motors (3) can be improved as compared with the case of controlling motors (3) based on the detection results of the attitude, speed, and the like of moving body (1).

Further, in motor control device (10) according to a second aspect, in the first aspect, acquisition unit (82) calculates a main body torque value based on three or more torque detection values (T1 to T4). The main body torque value corresponds to the sum of the torques generated between three or more motors (3) and moving body main body (5). Motor controller (100) controls three or more motors (3) based on the main body torque value.

According to the above configuration, the main body torque value can be controlled.

Further, in motor control device (10) according to a third aspect, in the first or second aspect, acquisition unit (82) calculates a main body thrust value corresponding to the thrust of moving body main body (5), based on three or more thrust detection values (F1 to F4). Motor controller (100) controls three or more motors (3) based on the main body thrust value.

According to the above configuration, the main body thrust value can be controlled.

Further, in motor control device (10) according to a fourth aspect, in any one of the first to third aspects, motor controller (100) includes three or more distributed controllers (2) and a master unit (intermediate unit 7). Three or more distributed controllers (2) have one-to-one correspondence to three or more motors (3), and control corresponding motors (3). The master unit generates control signals for controlling three or more motors (3) based on at least one of a group of three or more torque detection values (T1 to T4) and a group of three or more thrust detection values (F1 to F4), and transmits the control signals to three or more distributed controllers (2), respectively.

According to the above configuration, a processing amount of each of three or more distributed controllers (2) can be reduced as compared with the case where each of three or more distributed controllers (2) makes a determination based on at least one of the group of three or more torque detection values (T1 to T4) and the group of three or more thrust detection values (F1 to F4).

Further, in motor control device (10) according to a fifth aspect, in any one of the first to third aspects, motor controller (100) includes three or more distributed controllers (2). Three or more distributed controllers (2) have one-to-one correspondence to three or more motors (3), and control corresponding motors (3). One of three or more distributed controllers (2) generates control signals for controlling motors (3) corresponding to remaining distributed controllers (2), based on at least one of a group of three or more torque detection values (T1 to T4) and a group of three or more thrust detection values (F1 to F4), and transmits the control signals to remaining distributed controllers (2).

According to the above configuration, a processing amount of each of distributed controllers (2) that does not make a determination based on at least one of the group of three or more torque detection values (T1 to T4) and the group of three or more thrust detection values (F1 to F4) can be reduced as compared with the case where each of three or more distributed controllers (2) makes the determination.

Further, in motor control device (10) according to a sixth aspect, in any one of the first to third aspects, motor controller (100) includes three or more distributed controllers (2). Three or more distributed controllers (2) have one-to-one correspondence to three or more motors (3), and control corresponding motors (3). Each of three or more distributed controllers (2) controls corresponding motor (3) based on at least one of a group of three or more torque detection values (T1 to T4) and a group of three or more thrust detection values (F1 to F4).

According to the above configuration, processing based on at least one of the group of three or more torque detection values (T1 to T4) and the group of three or more thrust detection values (F1 to F4) can be distributed to three or more distributed controllers (2). Thus, control responsiveness of motors (3) can be further improved.

Further, in motor control device (10) according to a seventh aspect, in any one of the first to sixth aspects, motor controller (100) has a function of controlling three or more motors (3) further based on an attitude instruction signal instructing an attitude of moving body main body (5).

According to the above configuration, control responsiveness of the attitude of moving body main body (5) can be improved.

Further, in motor control device (10) according to an eighth aspect, in any one of the first to seventh aspects, motor controller (100) has a function of controlling three or more motors (3) further based on rotation instruction signals instructing numbers of revolutions of three or more motors (3) or voltage instruction signals instructing applied voltages.

According to the above configuration, control accuracy of motors (3) can be improved as compared with the case where motor controller (100) controls motors (3) based on at least one of a group of three or more torque detection values (T1 to T4) and a group of three or more thrust detection values (F1 to F4).

Further, in motor control device (10) according to a ninth aspect, in any one of the first to eighth aspects, motor controller (100) performs feedback control such that three or more torque detection values (T1 to T4) approach corresponding torque target values, respectively.

According to the above configuration, control accuracy of motors (3) can be improved.

Further, in motor control device (10) according to a tenth aspect, in any one of the first to ninth aspects, motor controller (100) performs feedback control such that three or more thrust detection values (F1 to F4) approach corresponding thrust target values, respectively.

According to the above configuration, control accuracy of motors (3) can be improved.

Further, motor control device (10) according to an eleventh aspect further includes output unit (101) in any one of the first to tenth aspects. Output unit (101) outputs at least one of a group of three or more torque detection values (T1 to T4) and a group of three or more thrust detection values (F1 to F4).

According to the above configuration, at least one a group of three or more torque detection values (T1 to T4) and a group of three or more thrust detection values (F1 to F4) can be used outside motor control device (10). For example, a device outside motor control device (10) monitors at least one of the group of three or more torque detection values (T1 to T4) and the group of three or more thrust detection values (F1 to F4) output from output unit (101) to be capable of determining operating states of motors (3).

Further, motor control device (10) according to a twelfth aspect further includes control output unit (102) in any one of the first to eleventh aspects. Control output unit (102) outputs information about control content of motor controller (100) for one of three or more motors (3).

According to the above configuration, a user or the like can understand the control content of motors (3).

The configurations according to the second to twelfth aspects are not essential to motor control device (10) and can be omitted as appropriate.

Further, moving body (1) according to a thirteenth aspect includes motor control device (10) according to any one of the first to twelfth aspects, three or more motors (3), three or more propellers (4), and moving body main body (5).

According to the above configuration, control responsiveness of motors (3) can be improved.

Further, a motor control method according to a fourteenth aspect includes a first step and a second step. In the first step, at least one of a group of three or more torque detection values (T1 to T4) and a group of three or more thrust detection values (F1 to F4) is acquired. Three or more torque detection values (T1 to T4) correspond to torques generated between three or more motors (3) and three or more propellers (4) mounted on moving body main body (5), respectively. Three or more propellers (4) correspond one-to-one to three or more motors (3), and rotate through forces applied from corresponding motors (3) to generate thrusts. Three or more thrust detection values (F1 to F4) correspond to thrusts generated by three or more propellers (4), respectively. In the second step, three or more motors (3) are controlled based on at least one of the group of three or more torque detection values (T1 to T4) and the group of three or more thrust detection values (F1 to F4).

According to the above configuration, control responsiveness of motors (3) can be improved.

Further, a program according to a fifteenth aspect is a program for causing one or more processors to execute the motor control method according to the fourteenth aspect.

According to the above configuration, control responsiveness of motors (3) can be improved.

Various configurations (including modifications) of motor control device (10) and moving body (1) according to the exemplary embodiment are not limited to the above aspects, and can be embodied by the motor control method and the program.

### REFERENCE MARKS IN THE DRAWINGS

1: moving body
2, 2m, 2s: distributed controller
3: motor
4: propeller
5: moving body main body
6: host unit
7: intermediate unit (master unit)
9: motion detector
10: motor control device
21: current controller
23: motor rotation measurement unit
24: power source circuit
25: current sensor
26: calculator
27: pressure sensor
28: thrust calculator
41, 42, 43, 44: propeller
51: arm
71: altitude controller
72, 73: position controller
74, 75: speed controller
76, 77, 78: angle controller
79, 80, 81: angular velocity controller
82: acquisition unit
100: motor controller
101: output unit
102: control output unit
821: thrust controller
822, 823, 824: torque controller

## Claims

1. A motor control device comprising:
an acquisition unit that acquires at least one of a group of three or more torque detection values and a group of three or more thrust detection values, the three or more torque detection values corresponding to torques generated between three or more motors and three or more propellers mounted on a moving body main body, the three or more propellers corresponding one-to-one to the three or more motors, and rotating through forces applied from the three or more motors to generate thrusts, respectively, the three or more thrust detection values corresponding to thrusts generated by the three or more propellers, respectively; and
a motor controller that controls the three or more motors based on at least one of the group of the three or more torque detection values and the group of the three or more thrust detection values.

2. The motor control device according to claim 1, wherein
the acquisition unit calculates a main body torque value corresponding to a sum of torques generated between the three or more motors and the moving body main body, based on the three or more torque detection values, and
the motor controller controls the three or more motors based on the main body torque value.

3. The motor control device according to claim 1 or 2, wherein
the acquisition unit calculates a main body thrust value corresponding to a thrust of the moving body main body, based on the three or more thrust detection values, and
the motor controller controls the three or more motors based on the main body thrust value.

4. The motor control device according to any one of claims 1 to 3, wherein the motor controller includes:
three or more distributed controllers that correspond one-to-one to the three or more motors and control the three or more motors, respectively; and
a master unit that generates control signals for controlling the three or more motors, respectively, based on at least one of the group of the three or more torque detection values and the group of the three or more thrust detection values, and transmits the control signals to the three or more distributed controllers.

5. The motor control device according to any one of claims 1 to 3, wherein
the motor controller includes three or more distributed controllers that correspond one-to-one to the three or more motors and control the three or more motors, respectively, and
one of the three or more distributed controllers generates control signals for controlling the motors corresponding to remaining distributed controllers of the three or more distributed controllers, respectively, based on at least one of the group of the three or more torque detection values and the group of the three or more thrust detection values, and transmits the control signals to the remaining distributed controllers.

6. The motor control device according to any one of claims 1 to 3, wherein
the motor controller includes three or more distributed controllers that correspond one-to-one to the three or more motors and control the three or more motors, respectively, and
the three or more distributed controllers control the three or more motors, respectively, based on at least one of the group of the three or more torque detection values and the group of the three or more thrust detection values.

7. The motor control device according to any one of claims 1 to 6, wherein the motor controller has a function of controlling the three or more motors further based on an attitude instruction signal instructing an attitude of the moving body main body.

8. The motor control device according to any one of claims 1 to 7, wherein the motor controller has a function of controlling the three or more motors further based on rotation instruction signals instructing numbers of revolutions of the three or more motors or voltage instruction signals instructing applied voltages.

9. The motor control device according to any one of claims 1 to 8, wherein the motor controller performs feedback control in such a manner that the three or more torque detection values approach corresponding torque target values, respectively.

10. The motor control device according to any one of claims 1 to 9, wherein the motor controller performs feedback control in such a manner that the three or more thrust detection values approach corresponding thrust target values, respectively.

11. The motor control device according to any one of claims 1 to 10, further comprising an output unit that outputs at least one of the group of the three or more torque detection values or the group of the three or more thrust detection values.

12. The motor control device according to any one of claims 1 to 11, further comprising a control output unit that outputs information about control content of the motor controller for one of the three or more motors.

13. A moving body comprising:
the motor control device according to any one of claims 1 to 12;
the three or more motors;
the three or more propellers; and
the moving body main body.

14. A motor control method comprising:
acquiring at least one of a group of three or more torque detection values and a group of three or more thrust detection values, the three or more torque detection values corresponding to torques generated between three or more motors and three or more propellers mounted on a moving body main body, the three or more propellers corresponding one-to-one to the three or more motors, and rotating through forces applied from the three or more motors to generate thrusts, respectively, the three or more thrust detection values corresponding to thrusts generated by the three or more propellers, respectively; and
controlling the three or more motors based on at least one of the group of the three or more torque detection values and the group of the three or more thrust detection values.

15. A program for causing one or more processors to execute the motor control method according to claim 14.
